# EUROPÄISCHE PATENTSCHRIFT

(11) **EP 0 622 575 B1**
(45) Veröffentlichungstag und Bekanntmachung des Hinweises auf die Patenterteilung: **08.05.1996**
(21) Anmeldenummer: 94103573.5
(22) Anmeldetag: 09.03.1994
(51) Int. Cl.: F16L 3/14, F16L 3/133

(54) **Halterung mit einer Rohrschelle oder dergleichen**
Mounting system using a pipe clamp or the like
Dispositif de serrage utilisant un collier de fixation ou similaire pour tuyaux

(30) Priorität: 23.04.1993 DE 4313350
(43) Veröffentlichungstag der Anmeldung: 02.11.1994
(73) Patentinhaber: DIAG DESIGN AG, CH-6301 Zug (CH)
(72) Erfinder:
(74) Vertreter: Patentanwälte Dipl.-Ing. Hans Schmitt Dipl.-Ing. Wolfgang Maucher

(56) Entgegenhaltungen:
- EP-A- 0 377 236
- DE-U- 9 103 295

## Beschreibung

Die Erfindung betrifft eine Halterung mit einer Rohrschelle oder dergleichen Halteteil, welche über einen an ihr angreifenden stabförmigen Abstandhalter mit zumindest einem weiteren Halteteil und/oder mit einem Befestigungselement verbunden ist.

Zur Decken-, Wand- oder Bodenmontage von Rohren kennt man bereits eine Halterung, die zur Aufnahme des Rohres eine ein- oder zweiteilige Rohrschelle als Halteteil aufweist. Diese Rohrschelle ist über einen Gewindestab mit einer Montageschiene oder dergleichen Befestigungselement verbunden, welches an der Wand, am Boden oder an der Decke befestigt ist. Dabei dient der Gewindestab als stabförmiger Abstandhalter, der mit seinem einen Endbereich in ein an der Rohrschelle vorgesehenes Innengewinde und mit seinem anderen Endbereich in ein Innengewinde des Befestigungselementes eingedreht werden kann.

Um beispielsweise bei einer Deckenmontage die Abhängelänge des Rohres variieren und an die örtlichen Gegebenheiten anpassen zu können, ist es üblich, einen entsprechenden Teilbereich vom Gewindestab der vorbekannten Halterung vor Ort abzusägen. Durch dieses Absägen entstehen jedoch Grate und dergleichen, die ein Eindrehen des Gewindestabes erschweren und das Gewinde beschädigen können. Zudem bedeutet das Ablängen des Gewindestabes einen nicht unerheblichen Zeit- und Arbeitsaufwand, welche die Montage eines Rohres oder dergleichen verzögert.

Es besteht daher insbesondere die Aufgabe, eine Halterung der eingangs erwähnten Art zu schaffen, die schnell und einfach an die örtlichen Gegebenheiten angepaßt werden kann und die dennoch mit geringem Aufwand herstellbar ist.

Die erfindungsgemäße Lösung dieser Aufgabe besteht bei der Halterung der eingangs erwähnten Art insbesondere darin, daß der stabförmige Abstandhalter im Verlauf seiner Längserstreckung zumindest eine als Trenn- oder Sollbruchstelle dienende vorgefertigte Querschnitts-Schwächungsstelle aufweist.

Der Abstandhalter der erfindungsgemäßen Halterung weist zumindest eine vorkonfektionierte Einkerbung oder dergleichen Kerbstelle als Querschnitts-Schwächungsstelle auf. Der Abstandhalter kann somit auch ohne Werkzeug an dieser Stelle seiner Längserstreckung durchtrennt und entsprechend dem gewünschten Abstand verkürzt werden. Ein umständliches Absägen des entsprechenden Teilbereiches ist bei der erfindungsgemäßen Halterung somit nicht erforderlich.

Dabei kann der Abstandhalter der erfindungsgemäßen Halterung als Gewindestab, aber auch lediglich als gewindeloses stabförmiges Distanzstück vorgesehen sein, welches in entsprechenden Montageöffnungen des Halte- und/oder des Befestigungsteiles zu befestigen ist.

Um die vielseitige Anwendbarkeit und die einfache Handhabung der erfindungsgemäßen Halterung noch zu begünstigen, ist es zweckmäßig, wenn der Abstandhalter mehrere, vorzugsweise gleichmäßig voneinander beabstandete Querschnitts-Schwächungsstellen aufweist. Dabei kann der Abstandhalter an einer der vorhandenen Querschnitts-Schwächungsstellen durchtrennt und so an die gewünschte Länge angepaßt werden.

Besonders vorteilhaft ist es, wenn der Abstandhalter zumindest im Bereich der Querschnitts-Schwächungsstellen einen runden Querschnitt hat und wenn die Querschnitts-Schwächungsstellen als Einstiche ausgebildet sind. Insbesondere bei solchen Einstichen kann ein zeitraubendes Entfernen von Graten oder dergleichen, die ein Eindrehen oder Einsetzen des Abstandhalters in die entsprechenden Aufnahmeöffnungen am Halte- oder am Befestigungsteil erschweren könnten, verzichtet werden.

Eine besonders vorteilhafte und bevorzugte Ausführungsform gemäß der Erfindung sieht vor, daß der Abstandhalter zumindest an seinem einen freien Endbereich, vorzugsweise über seine gesamte Längserstreckung, ein Außengewinde aufweist und daß die Schwächungsstellen im Bereich des Außengewindes vorgesehen sind. Da bei dieser Ausführungsform die Schwächungsstellen über die Längserstreckung des Abstandhalters in dessen das Außengewinde aufweisenden Bereich vorgesehen sind, kann der Abstandhalter auf einfache Weise an einer der Schwächungsstellen verkürzt und anschließend in das entsprechende Innengewinde des Halteteiles oder des Befestigungselementes eingedreht werden, ohne daß das erforderliche Außengewinde des Abstandhalters an dieser Trennstelle eingeschnitten oder nachgeschnitten werden müßte.

Dabei ist es zweckmäßig, wenn die Einstiche jeweils durch zwei umlaufende Kerbflanken begrenzt sind, welche vorzugsweise einen etwa rechten Winkel zwischen sich einschließen.

Bevorzugt wird eine Ausführungsform, bei der der Kerbgrund der Einstiche jeweils einen Durchmesser von etwa 4,5 bis 5 mm aufweist. Ein solcher Einstich, dessen Kerbgrund einen Durchmesser von etwa 4, 5 bis 5 mm aufweist, weist immer noch eine ausreichende Zugfestigkeit, insbesondere zur Befestigung von leichten Montageelementen, wie zum Beispiel Rohrschellen, auf und läßt sich dennoch bei Bedarf ohne größere Kraftanstrengungen leicht durchtrennen.

Eine Weiterbildung gemäß der Erfindung sieht vor, daß der Kerbgrund der Einstiche jeweils außerhalb des Gewinde-Querschnittsbereiches angeordnet ist. Bei dieser Ausführungsform kann nach dem Durchtrennen des Abstandhalters auf ein Entgraten oder ein Nacharbeiten der Trennstelle verzichtet werden, da Grate, die sich eventuell beim Durchtrennen des Abstandhalters an der entsprechenden Schwächungsstelle gebildet haben könnten, nicht bis in den Querschnittsbereich des Gewindes hineinragen.

Weitere Merkmale der Erfindung ergeben sich aus der folgenden Beschreibung eines erfindungsgemäßen Ausführungsbeispieles in Verbindung mit den Ansprüchen und der Zeichnung. Die einzelnen Merkmale können je für sich oder zu mehreren bei einer Ausführungsform der Erfindung verwirklicht sein.

Es zeigt in unterschiedlichen Maßstäben:
- Fig. 1: eine Halterung mit einer Rohrschelle, wobei die Rohrschelle über einen Gewindestab mit einer Montageschiene verbunden ist, und
- Fig. 2: den Gewindestab der Halterung aus Figur 1 in einer Seitenansicht.

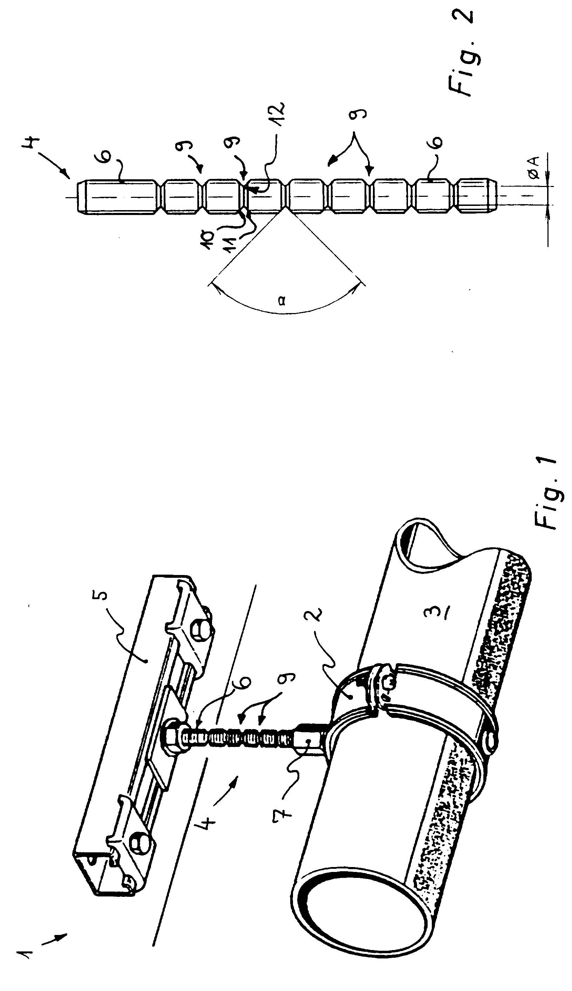

Figur 1 zeigt eine Halterung 1 in einer perspektivischen Darstellung, die eine Rohrschelle 2 als Halteteil aufweist. Die Rohrschelle 2, die ein Rohr 3 umgreift, ist über einen stabförmigen Abstandhalter 4 mit einer Montageschiene 5 verbunden, die als Befestigungselement dient und sich zur Boden-, Wand- oder - wie hier - zur Deckenmontage eignet.

Wie Figur 1 zeigt, ist der Abstandhalter 4 als Gewindestab ausgebildet, welcher über seine gesamte Längserstreckung ein Außengewinde 6 aufweist. Dieser Gewindestab 4 ist mit seinem einen Ende in das Innengewinde eines Anschlußstückes 7 eingeschraubt, das mit der Rohrschelle 2 fest verbunden ist und zum Kontern mit einem Maulschlüssel einen sechskantigen Außenquerschnitt hat.

Um den Abstand zwischen der Rohrschelle 2 und der als Befestigungselement dienenden Montageschiene 5 variieren und an die örtlichen Gegebenheiten anpassen zu können, weist der Gewindestab 4 im Verlauf seiner Längserstreckung mehrere, als Trennstelle dienende, vorgefertigte Querschnitts-Schwächungsstellen 9 auf, die hier als Einstiche ausgebildet und gleichmäßig voneinander beabstandet sind.

Aus Figur 2 wird deutlich, daß die Einstiche, die ebenfalls im Bereich des Außengewindes 6 vorgesehen sind, durch jeweils zwei umlaufende Kerbflanken 10, 11 begrenzt werden, welche einen etwa rechten Winkel α zwischen sich einschließen.

Zum Kürzen des Abstandhalters 4 auf die benötigte Länge kann ein Teilbereich seiner Längserstreckung an der entsprechenden Schwächungsstelle 9 abgetrennt werden. Dabei kann das Ablängen des Abstandhalters 4 auf einfache Weise, beispielsweise durch ein Durchbrechen oder Durchschneiden des Gewindestabes 4, erfolgen. Da das Außengewinde 6 des Gewindestabes 4 auch im Bereich der Einstiche 9 vorgesehen ist, kann der Gewindestab 4 nach dem Durchtrennen ohne weiteres beispielsweise in das Innengewinde des Anschlußstückes 7 eingeschraubt werden. Dabei bildet die am Abstandhalter 4 verbleibende Kerbflanke 10, 11 des als Trennstelle verwendeten Einstiches 9 eine Phase, die das Einschrauben des Gewindestabes 4 erleichtert.

Aus Figur 2 wird deutlich, daß der Kerbgrund 12 der Einstiche 9 jeweils mit Abstand außerhalb des Querschnittsbereiches des Außengewindes 6 angeordnet ist. Somit können nach dem Durchbrechen und Abtrennen des Gewindestabes an diesem verbleibende Grate nicht dessen Außengewinde 6 beeinträchtigen; dennoch ist der Gewindestab 4 auch ohne ein Entgraten an der Trennstelle leicht in das entsprechende Innengewinde der Halterung 1 einzuschrauben.

Der zum Beispiel aus Stahl hergestellte Gewindestab 4 der Halterung 1 weist eine hohe Zugfestigkeit auf und ist dennoch leicht an einer seiner Einstiche 9 zu durchtrennen, wenn der Kerbgrund 12 der Einstiche 9 jeweils einen Durchmesser A von etwa 4,5 bis 5 mm aufweist.

Der hier als Gewindestab ausgebildete Abstandhalter 4 mit seinen als Trennstellen dienenden, vorgefertigten Querschnitts-Schwächungsstellen 9 ist in den verschiedensten Halterungen 1 einsetzbar. Beispielsweise kann das Halteteil 2 auch als Kabelkanal, als Schild-Trägerplatte oder dergleichen ausgebildet sein. Bei einer als Schraubhalter ausgebildeten Halterung kann das Befestigungselement 5 auch als Dübel oder dergleichen ausgebildet sein.

Statt eines Befestigungselementes 5 kann die Halterung 1 auch zwei Rohrschellen 2 aufweisen, die über den Abstandhalter 4 miteinander verbunden sind.

Die erfindungsgemäße Halterung kann durch Kürzen ihres Abstandhalters 4 an einer der vorgefertigten Querschnitts-Schwächungsstellen 9 schnell und einfach an die örtlichen Gegebenheiten angepaßt werden und ist dennoch mit geringem Aufwand herstellbar.

## Patentansprüche

1. Halterung mit einer Rohrschelle oder dergleichen Halteteil, welche über einen an ihr angreifenden stabförmigen Abstandhalter mit zumindest einem weiteren Halteteil und/oder mit einem Befestigungselement verbunden ist, **dadurch gekennzeichnet,** daß der stabförmige Abstandhalter (4) im Verlauf seiner Längserstreckung zumindest eine als Trennstelle dienende vorgefertigte Querschnitts-Schwächungsstelle (9) aufweist.

2. Halterung nach Anspruch 1, dadurch gekennzeichnet, daß der Abstandhalter (4) mehrere, vorzugsweise gleichmäßig voneinander beabstandete Querschnitts-Schwächungsstellen (9) aufweist.

3. Halterung nach Anspruch 1 oder 2, dadurch gekennzeichnet, daß der Abstandhalter (4) zumindest im Bereich der Querschnitts-Schwächungsstellen (9) einen runden Querschnitt hat und daß die Querschnitts-Schwächungsstellen (9) als Einstiche ausgebildet sind.

4. Halterung nach einem der Ansprüche 1 bis 3, dadurch gekennzeichnet, daß der Abstandhalter (4) zumindest an seinem einen freien Endbereich, vorzugsweise über seine gesamte Längserstreckung, ein Außengewinde (6) aufweist und daß die Schwächungsstellen (9) im Bereich des Außengewindes (6) vorgesehen sind.

5. Halterung nach einem der Ansprüche 3 oder 4, dadurch gekennzeichnet, daß die Einstiche (9) jeweils durch zwei umlaufende Kerbflanken (10, 11) begrenzt sind, welche vorzugsweise einen etwa rechten Winkel (α) zwischen sich einschließen.

6. Halterung nach Anspruch 5 dadurch gekennzeichnet, daß der Kerbgrund (12) der Einstiche (9) jeweils einen Durchmesser (A) von etwa 4,5 bis 5 mm aufweist.

7. Halterung nach einem der Ansprüche 5 oder 6, dadurch gekennzeichnet, daß der Kerbgrund (12) der Einstiche (9) jeweils außerhalb des Gewinde-Querschnittsbereiches angeordnet ist.

8. Halterung nach einem der Ansprüche 1 bis 7, dadurch gekennzeichnet, daß der Abstandhalter aus Metall, insbesondere aus Stahl, oder aus Kunststoff hergestellt ist.

## Claims

1. A mounting system using a pipe clamp or similar retaining member which, by way of a rod-shaped spacer engaged therewith, is connected to at least one further retaining member and/or to a fastening element, **characterized in that** the rod-shaped spacer (4) has over its length at least one preproduced necking (9) serving as parting point.

2. A mounting system as claimed in claim 1, characterized in that the spacer (4) has a plurality of preferably equi-spaced neckings (9).

3. A mounting system as claimed in claim 1 or claim 2, characterized in that the spacer (4) has a round cross section, at least in the region of the neckings (9), and that the neckings (9) take the form of turned recesses.

4. A mounting system as claimed in any one of claims 1 to 3, characterized in that the spacer (4) has at least at its free end zone, preferably throughout its length, an external thread (6) and that the neckings (9) are provided in the region of the external thread (6).

5. A mounting system as claimed in any one of claims 3 or 4, characterized in that the turned recesses (9) are defined in each case by two circumferential notch flanks (10, 11) preferably including an angle (a) of approximately 90° therebetween.

6. A mounting system as claimed in claim 5, characterized in that the notch base (12) of the turned recesses (9) in each case has a diameter (A) of about 4.5 to 5 mm.

7. A mounting system as claimed in any one of claims 5 or 6, characterized in that the notch base (12) of the turned recesses (9) is in each case arranged outside the cross-sectional area of the thread.

8. A mounting system as claimed in any one of claims 1 to 7, characterized in that the spacer is made of metal, particularly of steel, or of plastic.

## Revendications

1. Dispositif de maintien utilisant un collier pour tuyaux ou un élément de maintien analogue, qui est relié à au moins un autre élément de maintien et/ou à un élément de fixation par l'intermédiaire d'un écarteur en forme de tige agissant sur lui, **caractérisé** en ce que l'écarteur en forme de tige (4) présente, dans le cours de son étendue longitudinale, au moins un point d'affaiblissement de section préétabli (9) servant de point de séparation.

2. Dispositif de maintien selon la revendication 1, **caractérisé** en ce que l'écarteur (4) présente plusieurs points d'affaiblissement de section (9), de préférence uniformément distants les uns des autres.

3. Dispositif de maintien selon la revendication 1 ou 2, **caractérisé** en ce que l'écarteur (4) possède une section ronde au moins dans la région des points d'affaiblissement de section (9), et en ce que les points d'affaiblissement de section (9) sont réalisés sous la forme d'encoches.

4. Dispositif de maintien selon l'une des revendications 1 à 3, **caractérisé** en ce que l'écarteur (4) présente un filetage extérieur (6) au moins sur l'une de ses régions terminales libres, et de préférence sur toute son étendue longitudinale, et en ce que les points d'affaiblissement de section (9) sont prévus dans la région du filetage extérieur (6).

5. Dispositif de maintien selon la revendication 3 ou 4, **caractérisé** en ce que les encoches (9) sont respectivement délimitées par deux flancs d'entaille entourants (10, 11), qui forment de préférence entre eux un angle approximativement droit (α).

6. Dispositif de maintien selon la revendication 5, **caractérisé** en ce que le fond d'entaille (12) des encoches (9) présente chaque fois un diamètre (A) d'environ 4,5 à 5 mm.

7. Dispositif de maintien selon la revendication 5 ou 6, **caractérisé** en ce que le fond d'entaille (12) des encoches (9) est chaque fois disposé en dehors de la zone de section filetée.

8. Dispositif de maintien selon l'une des revendications 1 à 7, **caractérisé** en ce que l'écarteur est réalisé en métal, notamment en acier, ou en matière plastique.
